# EUROPEAN PATENT SPECIFICATION

(11) **EP 0 527 430 B1**
(45) Date of publication and mention of the grant of the patent: **09.07.1997**
(21) Application number: 92113353.4
(22) Date of filing: 05.08.1992
(51) Int. Cl.: G03B 19/04

(54) **Lens-fitted photographic film unit**
Filmpackung mit Aufnahmeobjektiv
Emballage de film photographique muni d'un objectif

(30) Priority: 13.08.1991 JP 228287/91
(43) Date of publication of application: 17.02.1993
(73) Proprietor: FUJI PHOTO FILM CO., LTD., Kanagawa (JP)
(72) Inventor: Yamashina, Yasuhiro, Minami-Ashigara-shi, Kanagawa (JP); Arai, Takuya, 2-26-30 Nishi-Azabu, Minato-ku, Tokyo (JP)
(74) Representative: Grünecker, Kinkeldey, Stockmair & Schwanhäusser Anwaltssozietät

(56) References cited:
- EP-A- 0 224 921
- GB-A- 2 235 984
- JP-A-62 156 641
- JP-A-63 221 331
- US-A- 5 005 035
- PATENT ABSTRACTS OF JAPAN vol. 13, no. 89 (P-836)2 March 1989 & JP-A-63 271 434

## Description

The present invention relates to a lens-fitted photographic film unit of the type as defined in the preamble of claim 1.

A lens-fitted photographic film unit of this type is disclosed in GB-A-2 235 984. The known photographic film unit has front and rear covers forming a rectangular unit body when attached to each other to include a photographic film cassette and other parts of the film unit to be included within the covers. When attached to each other, the front and rear covers will be encased tightly in an outer packaging or casing. The outer casing completely covers the outwardly facing surface of the front cover.

EP-A-224 921 discloses a conventional camera of a re-usable type having a projected grip portion. This reference does not describe that a grip portion may also be used in lens-fitted photographic film units of the disposable type. Moreover, this reference does not describe an outer casing for being fitted onto the camera casing.

In a further lens-fitted photographic film unit disclosed in US-A-4,972,649 (corresponding to JP-B- 2-32615), a taking lens, a film advancing mechanism and a shutter mechanism are incorporated in a main body. A photographic film cassette with a 135 type photographic film as defined by ISO code 1007, 1979 version is contained in the main body which is covered by a front cover and a rear cover for protecting the main body as well as the photographic film in a light-tight manner. The main body is provided on left and right sides of an exposure chamber with a film take-up chamber and a film supply chamber. Preliminarily, the film take-up chamber accommodates the photographic film cassette while the film supply chamber accommodates the photographic film wound in a roll after drawn out of the photographic film cassette. The rolled photographic film is wound on a spool of the photographic film cassette in the film take-up chamber for each exposure. Such a lens-fitted photographic film unit is a box-shape and its thickness in a direction of the optical axis of the taking lens is only slightly larger than the diameter of the photographic film cassette in order to enhance its portability.

However, researches have recently been carried out how to make sizes of compact cameras approach to a cigarette case size or even to a credit card size. This trend has fallen on lens-fitted photographic film units. For this purpose, there is an idea to make a new photographic film cassette with a smaller diameter in order to use it in a lens-fitted photographic film cassette. However, this idea is unacceptable since such a new type of photographic film cassette requires alteration of conventional photographic printers.

That thus the diameter of the 135 type photographic film cassette cannot be lessened has caused an obstacle to form the lens-fitted photographic film smaller in thickness. Besides, according as contriving to miniaturize camera sizes, there increases the danger of occurrence of camera shakes at the time of shutter releases.

It is an object of the present invention to provide a lens-fitted photographic film unit which is thin and can be easily held for picture taking.

The above and other objects are accomplished in accordance with claim 1 by providing a main body of a lens-fitted photographic film unit so that a film take-up chamber thereof is projected forward in an arc shape and the remaining portion of the main body is receded rearward. The main body is covered by a front cover having an arc-shaped grip portion for concealing the front wall of the film take-up chamber and a flat portion for concealing the remaining portion of the main body. The covers and the main body of the film unit are enclosed by an outer casing except that the grip projection is bared outside.

According to the present invention, the front cover is provided with the grip projection, so that it is very convenient for photographers to hold the grip easily with the photographers' fingers for picture taking without inducing camera shake. Also, a thickness of the lens-fitted photographic film unit is lessened at the portion excluding the grip projection, whereby a compact lens-fitted photographic film unit is realized.

The above and other objects and advantages will become apparent from the following description of preferred embodiments with reference to the accompanying drawings wherein:
Fig. 1 is a perspective view of a lens-fitted photographic film unit of a preferred embodiment according to the present invention;
Fig. 2 is a development of an outer casing of the lens-fitted photographic film unit;
Fig. 3 is a cross section of the lens-fitted photographic film unit; and
Fig. 4 is a perspective view of another example of a lens-fitted photographic film unit according to the present invention.

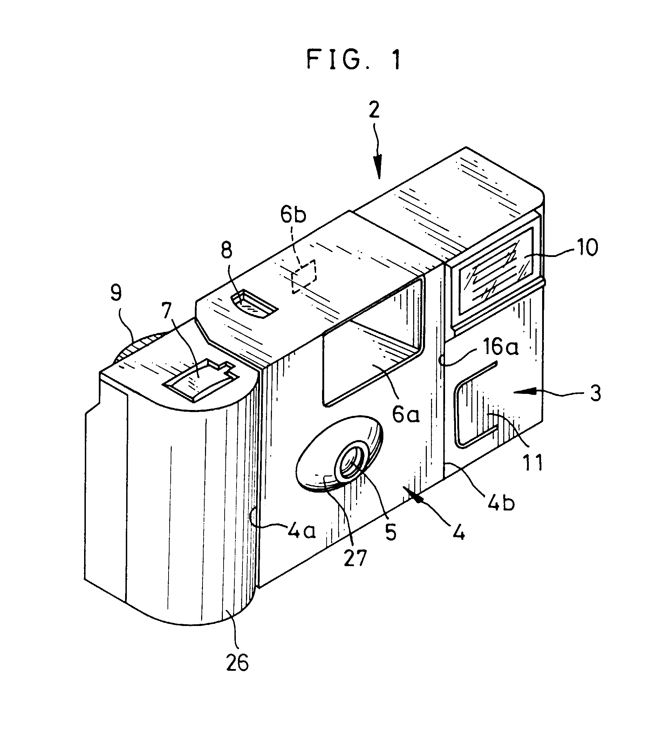

Referring to Fig. 1, a lens-fitted photographic film unit 2 comprises an outer casing 4 and a film housing 3 in which a photograph-taking mechanism is incorporated. The outer casing 4 is formed of a striplike cardboard having decoration and information printed thereon so as to impart a beautiful external appearance. Instead, a plastic sheet may be used as the outer casing 4. The outer casing 4 encircles around the middle portion of the film housing 3 and has an outline so as to expose a film advancing wheel 9, a flash window 10, a shutter release button 7 and a grip projection 26.

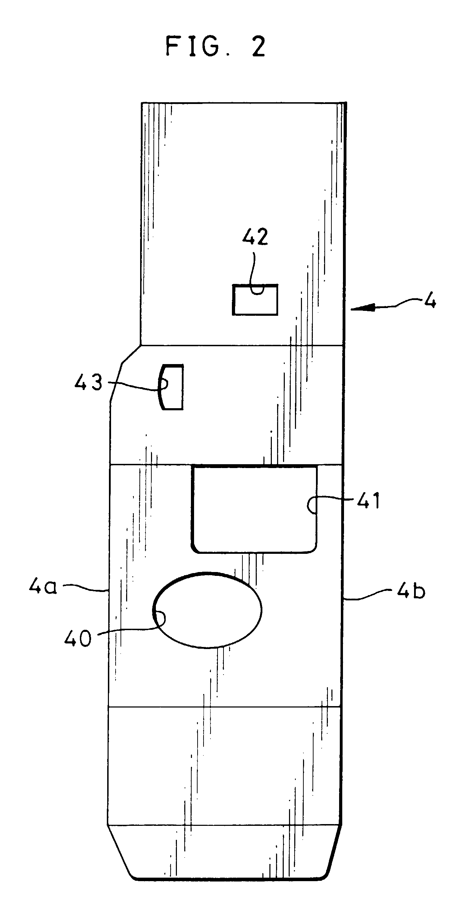

As illustrated in Fig. 2, the outer casing 4 is provided with openings 40 to 43 for respectively baring a taking lens 5, an object-side finder window 6a, a film frame counter 8 and an eye-side finder window 6b. An end 4a of the outer casing 4 is in contact with the grip projection 26 while an end 4b of that is in contact with a stepped portion 16a of a front cover 16 to be described later.

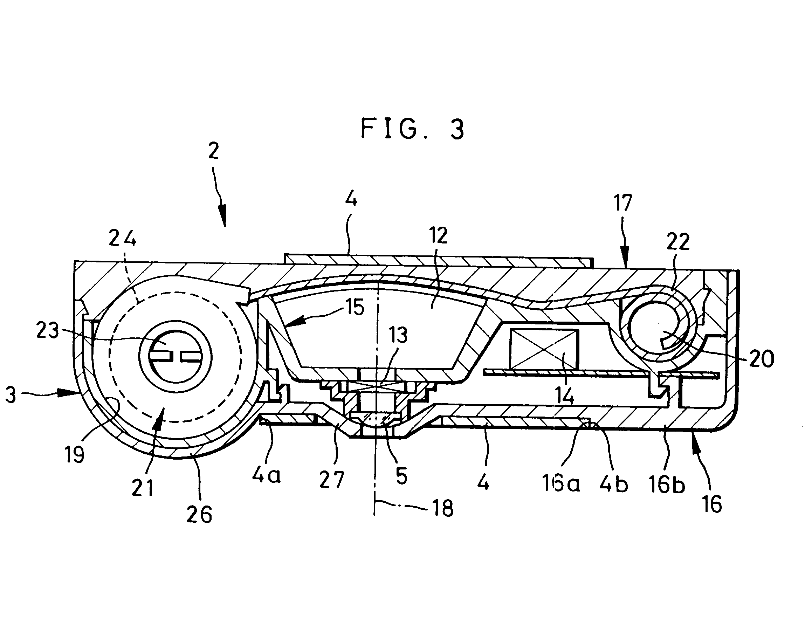

As illustrated in Fig. 3, the taking lens 5, a shutter mechanism 13, a film advancing mechanism (not illustrated) and a flash circuit 14 are incorporated in a main body 15 which is covered by the front cover 16 and a rear cover 17 to complete the film housing 3. Components used for the shutter mechanism 13, the film advancing mechanism and the flash circuit 14 are the same as those described in US-A- 4,972,649, and then description of those functions is omitted herein since it is not directly relevant for describing this invention.

The main body 15 is formed on both lateral sides with a film take-up chamber 19 and a film supply chamber 20, interposing an exposure chamber 12. The taking lens 5 is disposed at the forefront side of the exposure chamber 12 in an optical axis 18. In assembling, a photographic film cassette 21 is contained in the film take-up chamber 19. A 135 type unexposed photographic film 22 drawn out of the photographic film cassette 21 and wound in a roll is contained in the film supply chamber 20 with a trailing end thereof secured to a spool provided in the photographic film cassette 21. After this process, the rear cover 17 is attached to the rear side of the main body 15 so as to shield both chambers 19, 20 and the exposure chamber 12 from external light. When the main body 15 is observed in a cross section (see Fig. 3), the diameter of the film supply chamber 20 is smaller than that of flanges 24 of a spool 23. Furthermore, the diameter of the film take-up chamber 19 is formed in accordance with that of the photographic film cassette 21. Since the film supply chamber 20 is not provided with a core for winding the unexposed photographic film 22, it is possible to form the diameter of the film supply chamber 20 small. It is preferable to form the film supply chamber 20 so as to have a diameter of 18.2 mm or less. The main body 15 is thinned except the portion of the film take-up chamber 19.

After the aforementioned shutter mechanism 13, the taking lens 5 and the flash circuit 14 are attached to the front of the main body 15, the front cover 16 is attached to the main body 15 and the rear cover 17 by means of claws so as to be easily detached for recycling. The front cover 16 has a grip projection 26 in the shape of a circular arc at a position along the outline of the front surface of the film take-up chamber 19 and a flat portion 16b which is located in front of the exposure chamber 12 and the film supply chamber 20 and is receded with respect to the grip projection 26. As a result, the thickness of the lens-fitted photographic film unit 2 excluding the portion of the grip projection 26 is reduced by 2 to 3 mm, as compared with that of conventional lens-fitted photographic film units. Because the front cover 16 is provided with a forwardly projecting lens hood 27, the taking lens 5 can be disposed such that a distance between the taking lens 5 and the photographic film 22 is the same as conventional. The stepped portion 16a is formed in the front cover 16 so as to prevent movement of the outer casing 4.

The operation of the above preferred embodiment according to the present invention will be described briefly. When a photographer holds the lens-fitted photographic film unit 2 in order to take a photograph, his fingers are reached and settled on the grip projection 26 of the front cover 16. In this position, his fingers will not enter the optical light path of the taking lens 5. The photographer can hold the lens-fitted photographic film unit 2 firmly owing to the grip projection 26, so that camera shake can be preferably prevented when depressing the shutter release button 7. When taking a photograph by use with electronic flash, the photographer's fingers can easily reach to a flash charge switch 11, since the thickness of the photographic film unit 2 on the side of the film supply chamber 20 is reduced.

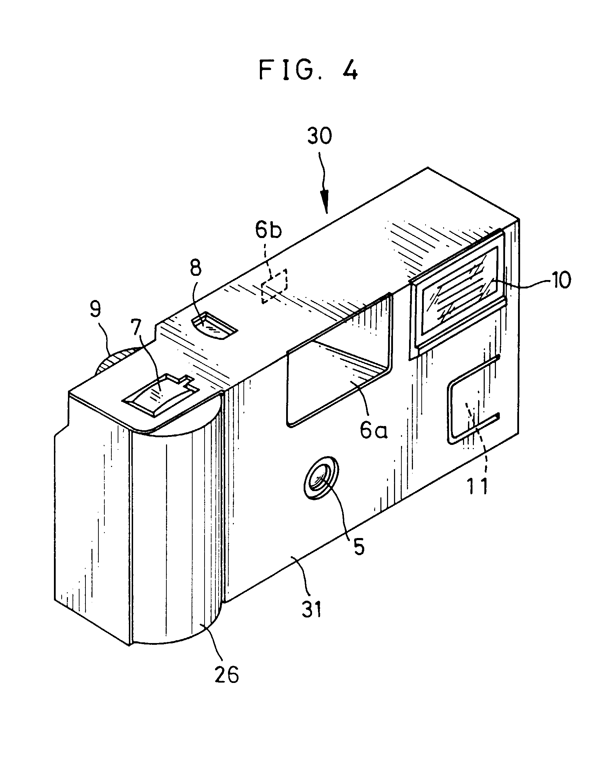

Although the front cover 16 is provided with the lens hood 27 in the above preferred embodiment, the lens hood 27 may be omitted to form a much thinner lens-fitted photographic film unit 30, as illustrated in Fig. 4. The shape of an outer casing 31 is boxlike as illustrated in Fig. 4. The outer casing 31 has openings for exposing the grip projection 26, the flash window 10 and the like. Elements the same as those in Fig. 1 are designated by the like reference numerals.

In this embodiment, the grip projection 26 is formed by projecting the portion of the front cover 16 in correspondence with the front surface of the film take-up chamber 19, but may be formed by projecting a portion of the rear cover in correspondence with the rear surface of the film take-up chamber reversely.

It is to be understood that the present invention can be changed, altered and modified to various forms without departing from the scope of the invention as defined in the appended claims.

## Claims

1. A lens-fitted photographic film unit comprising:
a main body (15) having a film take-up chamber (19) and a film supply chamber (20) on both sides of an exposure chamber (12) and photograph taking means (5, 13) on a front side of said exposure chamber (12);
a photographic film cassette (21) accommodated in said film take-up chamber (19), a photographic film (22) being contained in a roll in said film supply chamber (20) after being drawn from said photographic film cassette (21) with a trailing end of said photographic film (22) secured to a spool (23) provided in said photographic film cassette (21);
a rear cover (17) for covering said main body (15) from rear so as to shield said photographic film (22) from external light;
a front cover (16) for covering said main body (15) from front; and an outer casing (4, 31) which is fitted on the covers and the main body of said lens-fitted photographic film unit (2, 30),
**characterised in that**
said front cover (16) has a grip projection (26) to serve as a grip, said grip projection (26) being formed by a front outside surface of said film take-up chamber (19) projecting forward relative to a flat portion (16b) of said front cover (16) which is retracted rearward with respect to said grip, projection (26), and said outer casing (4, 31) includes an opening so as to expose said grip projection (26) outside from said outer casing (4, 31).

2. A lens-fitted photographic film unit as recited in claim 1, wherein said film supply chamber (20) is smaller than said film take-up chamber (19).

3. A lens-fitted photographic film unit as recited in claim 1 or 2, wherein said grip projection (26) of said front cover (16) is configured along an outline of the front outside surface of said film take-up chamber (19) into the shape of a circular arc.

4. A lens-fitted photographic film unit as recited in any one of claims 1 to 3, wherein said photograph taking means has a taking lens (5) and a shutter mechanism (13).

5. A lens-fitted photographic film unit as recited in any one of claims 1 to 4, wherein said outer casing (4, 31) has openings (40 to 43) for exposing said taking lens (5), an object-side finder window (6a), an eye-side finder window (6b) and a film frame counter (8).

6. A lens-fitted photographic film unit as recited in any one of claims 1 to 5, wherein said front cover (16) is provided on said flat portion (16b) with a lens hood (27) which is protruded forward for accommodating said taking lens (5).

7. A lens-fitted photographic film unit as recited in any one of claims 1 to 6, wherein said outer casing (4) has a striplike shape and surrounds the middle portion of said lens-fitted photographic film unit (2).

8. A lens-fitted photographic film unit as recited in any one of claims 1 to 7, wherein said front cover (16) is provided with a recessed portion (16a) engaging the outer casing (4) so as to prevent said casing (4) from being displaced.

9. A lens-fitted photographic film unit as recited in any one of claims 1 to 8, wherein said outer casing (4) is formed of a cardboard.

10. A lens-fitted photographic film as recited in any one of claims 1 to 8, wherein said outer casing (4) is formed of a plastic sheet.

## Patentansprüche

1. Objektivbestückte, fotografische Filmeinheit mit:
einem Hauptkörper (15) mit einer Filmaufnahmekammer (19) und einer Filmzufuhrkammer (20) an beiden Seiten einer Belichtungskammer (12), und mit einer Fotografiereinrichtung (5, 13) an einer Vorderseite der Belichtungskammer (12);
einer fotografischen Filmkassette (21) die in der Filmaufnahmekammer (19) untergebracht ist, einem fotografischen Film (22), der in einer Rolle in der Filmzufuhrkammer (20) aufgenommen ist, nachdem er aus der fotografischen Filmkassette (21) herausgezogen wurde, wobei ein nachlaufendes Ende des fotografischen Films (22) an einer Spule (23) befestigt ist, die in der fotografischen Filmkassette (21) vorgesehen ist;
einer rückwärtigen Abdeckung (17) zum Abdecken des Hauptkörpers (15) von hinten, um den fotografischen Film (22) gegen Außenlicht abzuschirmen;
einer vorderen Abdeckung (16) zum Bedecken des Hauptkörpers (15) von vorn, und einem äußeren Gehäuse (4, 31), das an die Abdeckungen und den Hauptkörper der objektivbestückten, fotografischen Filmeinheit (2, 30) angepaßt ist,
**dadurch gekennzeichnet,** daß die vordere Abdeckung (16) einen Griffvorsprung (26) aufweist, der als Griff dient, wobei der Griffvorsprung (26) durch eine vordere äußere Oberfläche der Filmaufnahmekammer (19) gebildet ist, die relativ zu einem flachen Bereich (16b) der vorderen Abdeckung (16) vorsteht, wobei der flache Bereich (16b) bezüglich des Griffvorsprungs (26) nach rückwärts zurückgezogen ist, und daß das äußere Gehäuse (4, 31) eine Öffnung aufweist, um den Griffvorsprung (26) nach außen aus dem äußeren Gehäuse (4, 31) freizulegen.

2. Objektivbestückte, fotografische Filmeinheit nach Anspruch 1, wobei die Filmzufuhrkammer (20) kleiner als die Filmaufnahmekammer (19) ist.

3. Objektivbestückte, fotografische Filmeinheit gemäß Anspruch 1 oder 2, wobei der Griffvorsprung (26) der vorderen Abdeckung (16) entlang einer Umrißlinie der vorderen, äußeren Oberfläche der Filmaufnahmekammer (19) in Form eines Kreisbogens ausgebildet ist.

4. Objektivbestückte, fotografische Filmeinheit nach einem der Ansprüche 1 bis 3, wobei die Fotografiereinrichtung ein Objektiv (5) und einen Verschlußmechanismus (13) aufweist.

5. Objektivbestückte, fotografische Filmeinheit nach einem der Ansprüche 1 bis 4, wobei das äußere Gehäuse (4, 31) Öffnungen (40 bis 43) aufweist, um das Objektiv (5), ein objektseitiges Sucherfenster (6a), ein augenseitiges Sucherfenster (6b) und einen Filmbildzähler (8) freizulegen.

6. Objektivbestückte, fotografische Filmeinheit nach einem der Ansprüche 1 bis 5, wobei die vordere Abdeckung (16) am flachen Bereich (16b) mit einer Gegenlichtblende (27) versehen ist, die zum Aufnehmen des Objektivs nach vorn vorspringt.

7. Objektivbestückte, fotografische Filmeinheit nach einem der Ansprüche 1 bis 6, wobei das äußere Gehäuse (4) eine streifenförmige Form aufweist und den mittleren Bereich der objektivbestückten, fotografischen Filmeinheit (2) umgibt.

8. Objektivbestückte, fotografische Filmeinheit nach einem der Ansprüche 1 bis 7, wobei die vordere Abdeckung (16) mit einem mit dem äußeren Gehäuse (4) in Eingriff stehenden, zurückgezogenen Bereich (16a) versehen ist, um zu verhindern, daß sich das äußere Gehäuse (4) verschiebt.

9. Objektivbestückte, fotografische Filmeinheit nach einem der Ansprüche 1 bis 8, wobei das äußere Gehäuse (4) aus Pappe ausgebildet ist.

10. Objektivbestückte, fotografische Filmeinheit nach einem der Ansprüche 1 bis 8, wobei das äußere Gehäuse (4) aus einer Kunststofffolie ausgebildet ist.

## Revendications

1. Dispositif à film photographique doté d'un objectif, comprenant :
- un corps principal (15) se composant d'une chambre (19) de rembobinage du film et d'une chambre (20) d'alimentation du film placées des deux côtés d'une chambre d'exposition (12) et de moyens (5, 13) de prises de vues placés sur une face frontale de ladite chambre d'exposition (12) ;
- une cassette (21) de film photographique logée dans ladite chambre (19) de rembobinage du film, un film photographique (22) étant contenu dans un rouleau dans ladite chambre (20) d'alimentation du film après avoir été extrait de ladite cassette (21) du film photographique, une amorce dudit film photographique (22) étant fixée à une bobine (23) prévue dans ladite cassette (21) du film photographique ;
- un couvercle arrière (17) pour recouvrir par l'arrière ledit corps principal (15), de façon à protéger ledit film photographique (22) contre la lumière extérieure ;
- un couvercle frontal (16) pour recouvrir par l'avant ledit corps principal (15) ; et un boîtier extérieur (4, 31) qui est monté sur les couvercles et sur le corps principal dudit dispositif (2, 30) à film photographique doté d'un objectif,
**caractérisé en ce que**
ledit couvercle frontal (16) comprend une partie en saillie (26) formant poignée, ladite partie en saillie (26) formant poignée étant formée par une surface extérieure frontale de ladite chambre (19) de rembobinage du film faisant saillie vers l'avant par rapport à une partie plate (16b) dudit couvercle frontal (16) qui est en retrait vers l'arrière par rapport à ladite partie en saillie (26) formant poignée, ledit boîtier extérieur (4, 31) comprenant une ouverture de façon à faire apparaître la partie en saillie (26) formant poignée, à l'extérieur par rapport audit boîtier extérieur (4, 31).

2. Dispositif à film photographique doté d'un objectif selon la revendication 1, dans lequel ladite chambre (20) d'alimentation du film est plus petite que ladite chambre (19) de rembobinage du film.

3. Dispositif à film photographique doté d'un objectif selon la revendication 1 ou 2, dans lequel ladite partie en saillie (26) formant poignée dudit couvercle frontal (16) est configurée le long d'un profil de la surface extérieure frontale de ladite chambre (19) de rembobinage du film en ayant la forme d'un arc circulaire.

4. Dispositif à film photographique doté d'un objectif selon l'une quelconque des revendications 1 à 3, dans lequel ledit moyen de prises de vues comprend un objectif (5) de prises de vues et un mécanisme (13) d'obturateur.

5. Dispositif à film photographique doté d'un objectif selon l'une quelconque des revendications 1 à 4, dans lequel ledit boîtier extérieur (4, 31) comprend des ouvertures (40 à 43) pour faire apparaître ledit objectif (5) de prises de vues, une fenêtre (6a) du viseur côté objet, une fenêtre (6b) du viseur côté oeil et un compteur de vues (8).

6. Dispositif à film photographique doté d'un objectif selon l'une quelconque des revendications 1 à 5, dans lequel ledit couvercle frontal (16) est doté, sur ladite partie plate (16b), d'un pare-soleil (27) d'objectif qui est en saillie vers l'avant pour loger ledit objectif (5) de prises de vues.

7. Dispositif à film photographique doté d'un objectif selon l'une quelconque des revendications 1 à 6, dans lequel ledit boîtier extérieur (4) a une forme de bande et entoure la partie centrale dudit dispositif (2) à film photographique doté d'un objectif.

8. Dispositif à film photographique doté d'un objectif selon l'une quelconque des revendications 1 à 7, dans lequel ledit couvercle frontal (16) est doté d'une partie (16a) en retrait s'engageant dans le boîtier extérieur (4) de façon à empêcher ledit boîtier (4) de bouger.

9. Dispositif à film photographique doté d'un objectif selon l'une quelconque des revendications 1 à 8, dans lequel ledit boîtier extérieur (4) est en carton.

10. Dispositif à film photographique doté d'un objectif selon l'une quelconque des revendications 1 à 8, dans lequel ledit boîtier extérieur (4) est formé par une feuille en matière plastique.
